# FASCICULE DE BREVET EUROPEEN

(11) **EP 2 640 634 B1**
(45) Date de publication et mention de la délivrance du brevet: **24.06.2015**
(21) Numéro de dépôt: 11802490.0
(22) Date de dépôt: 21.11.2011
(51) Int. Cl.: B64C 1/14

(54) **HUBLOT DE CABINE À DÉFORMATION PROGRAMMÉE, PROCÉDÉ DE FABRICATION D'UN TEL HUBLOT ET AÉRONEF INCORPORANT UN TEL HUBLOT**
KABINENFENSTER MIT PROGRAMMIERTER VERFORMUNG, VERFAHREN ZUR HERSTELLUNG EINES SOLCHEN FENSTERS UND FLUGZEUG MIT EINEM SOLCHEN FENSTER
CABIN WINDOW HAVING PROGRAMMED DEFORMATION, METHOD FOR MANUFACTURING SUCH A WINDOW, AND AIRCRAFT INCLUDING SUCH A WINDOW

(30) Priorité: 19.11.2010 FR 1059526
(43) Date de publication de la demande: 25.09.2013
(73) Titulaire: Airbus Operations, 31060 Toulouse (FR)
(72) Inventeur: CHAUMEL, Pascal, F- 31830 Plaisance du Touch (FR); LIEVEN, Patrick, F-31620 Fronton (FR); CASSAGNES, Serge, F-82170 Pompignan (FR)
(74) Mandataire: Santarelli
(86) Numéro de dépôt international: PCT/FR2011/052715
(87) Numéro de publication internationale: WO 2012/066264

(56) Documents cités:
- WO-A2-00/20275
- FR-A- 873 191
- FR-A- 1 008 481
- US-A- 2 602 970

## Description

La présente invention concerne un hublot d'aéronef et un procédé de fabrication d'un tel hublot. Elle concerne aussi un aéronef équipé d'un tel hublot.

Dans l'état de la technique, on connaît des hublots d'aéronef qui sont composés d'une vitre intérieure et d'une vitre extérieure, toutes les deux montées par l'intermédiaire d'un joint d'étanchéité sur un cadre de hublot qui est destiné à être monté en position affleurante sur le fuselage de l'aéronef.

Parmi les fonctions du hublot, on peut citer :
- la possibilité pour le passager de regarder vers l'extérieur, notamment au décollage ;
- la protection de la pression à l'intérieur de la cabine lors du vol même en haute altitude.

Dans cet état de la technique, la vitre extérieure est soumise à une forte différence de pression en vol entre la pression extérieure relativement basse et la pression intérieure qui est sensiblement celle de la cabine de l'aéronef.

En effet, pour éviter de faire travailler la vitre intérieure, celle-ci est percée de manière à établir une égalité des pressions entre la cabine proprement dite et l'intervalle ou volume constitué entre les vitres intérieure et extérieure du hublot

De manière connue, la vitre extérieure est conçue de manière à rester à affleurement par rapport à la surface extérieure du fuselage lorsque l'aéronef est situé au niveau du sol et, de ce fait, produire un effet adverse minimal d'un point de vue aérodynamique.

Du fait de la différence de pression entre le sol et notamment l'altitude de croisière de l'aéronef, la vitre extérieure tend à se déformer vers l'extérieur du fuselage. Pour garantir que l'effet de trainée supplémentaire ne dépasse pas une certaine limite, il faut s'assurer que la surépaisseur maximale introduite par la vitre extérieure par rapport à la surface naturelle du fuselage ne dépasse pas, elle aussi, une certaine limite. Dans des conditions données de vol, l'épaisseur de la vitre doit donc être augmentée, notamment en utilisant une quantité de matière supérieure de façon à garantir que sa déformation vers l'extérieur du fuselage ne dépasse pas une tolérance acceptable, notamment vis-à-vis de l'effet aérodynamique de traînée.

Il en résulte que la vitre extérieure doit présenter une épaisseur plus importante que la vitre intérieure. Dans un exemple de réalisation de l'état de la technique, l'épaisseur de la vitre extérieure est de 11 mm et celle de la vitre intérieure est de 5,25 mm. Dans cet exemple de réalisation, le poids de l'ensemble des vitres extérieures de l'aéronef est de 200 kg.

Par ailleurs, le coût d'exploitation d'un aéronef est directement fonction de la masse de l'aéronef puisqu'il faut d'autant plus de carburant que la masse de l'aéronef est importante. Il en résulte que la réduction du coût d'exploitation en vol impose une réduction de la masse de l'aéronef. On notera que l'effet de trainée augmente lui aussi les résistances en vol et donc la quantité de carburant nécessaire.

La caractéristique susvisée de surépaisseur de la vitre extérieure des hublots d'aéronef augmente justement la masse de l'appareil.

Selon un autre état de la technique connu, le document FR1008481 divulgue un hublot monté dans l'ouverture d'une fenêtre de paroi de cabine d'avion comportant un panneau intérieur bombé et transparent et un panneau extérieur affleurant la paroi extérieure de l'avion.

L'invention a pour objet un hublot d'aéronef, du genre comportant un cadre de fixation pour la fixation du hublot au fuselage d'un aéronef et au moins une vitre qui est montée dans le cadre de fixation par l'intermédiaire d'un système d'étanchéité , ladite au moins une vitre ayant une surface interne et une surface externe, caractérisé en ce que :
- la vitre comporte, dans un premier état dit de repos, au moins une concavité dans sa surface externe lorsqu'il n'y a pas de différence de pression entre la surface externe et la surface interne de la vitre,
- ladite au moins une concavité de la vitre s'efface au moins partiellement dans un deuxième état où il existe une différence de pression entre la surface externe et la surface interne de la vitre.

L'avantage est d'obtenir une vitre de plus faible épaisseur que les vitres utilisées jusqu'à maintenant et donc de diminuer la masse embarquée.

En effet, la forme de la vitre a été modifiée pour tenir compte d'une différence de pression qui va s'établir en altitude entre la surface externe et la surface interne de la vitre et à laquelle va être soumise la vitre.

Dans le premier état ladite au moins une concavité tend à éloigner la surface externe de la vitre du prolongement virtuel de la courbure du fuselage au droit du hublot.

En d'autres termes, ladite au moins une concavité tend à rapprocher la surface externe (et également la surface interne) de la vitre de l'intérieur de l'aéronef.

On notera que ladite au moins une concavité est conçue pour ne pas gêner la visibilité à travers le hublot. Par ailleurs, l'épaisseur de la vitre peut être réduite du fait de la concavité, ce qui permet de conserver une bonne visibilité à travers le hublot.

Ainsi, lorsque l'aéronef quitte le sol ladite au moins une concavité s'efface au moins en partie.

En effet, en sortant du premier état de repos l'aéronef entre dans un état intermédiaire et la forme de la concavité varie progressivement : la concavité devient de moins en moins prononcée (le rayon de courbure augmente) au fur et à mesure que l'aéronef grimpe en altitude et que la pressurisation cabine de l'aéronef est mise en place, établissant ainsi la différence de pression précitée.

Selon une caractéristique possible, ladite au moins une vitre est réalisée dans un matériau transparent, par exemple, coulé.

Ce matériau peut être moulé et permet d'obtenir grâce au seul moulage des pièces de formes complexes, variées et d'une grande précision.

Un tel matériau conserve de très bonnes caractéristiques mécaniques après moulage. L'épaisseur de la vitre réalisée dans ce matériau peut ainsi être réduite, ce qui procure une diminution de la masse embarquée.

Selon une caractéristique possible, lorsque la différence de pression entre la surface externe et la surface interne de la vitre atteint une valeur prédéterminée ladite au moins une concavité s'efface complètement.

En effet, la concavité s'efface complètement lorsque l'aéronef atteint un état stabilisé qui est défini par une différence de pression maximale entre la cabine de l'aéronef et l'extérieur de l'aéronef à une altitude donnée de vol de croisière (la pression est plus faible que la pression au sol mais devient constante pendant cette phase de vol stabilisé).

La surface externe de la vitre adopte alors la courbure du fuselage et est ainsi disposée dans le prolongement virtuel de celui-ci de façon à être montée en position affleurante par rapport au fuselage.

Selon une caractéristique possible, en vol la surface externe de la vitre comportant ladite au moins une concavité présente une forme aérodynamique optimale établie pour un aéronef donné.

Selon une caractéristique possible, ladite au moins une concavité est opposée à la concavité du fuselage de l'aéronef qui est orientée vers l'intérieur de l'aéronef.

Selon une caractéristique ladite au moins une concavité est définie dans une section transversale du fuselage.

Selon une caractéristique possible, la vitre comportant ladite au moins une concavité comporte au moins un bord qui présente une forme lui permettant d'insérer ladite vitre dans un cadre de fixation conventionnel. Ainsi, le hublot peut s'insérer dans tous les cadres ou encadrements existants.

Selon une caractéristique possible, le hublot comporte au moins deux vitres, à savoir une vitre intérieure et une vitre extérieure qui comporte ladite au moins une concavité, chaque vitre ayant une surface interne et une surface externe, la surface interne de la vitre extérieure étant en vis-à-vis de la surface externe de la vitre intérieure.

Selon une autre caractéristique possible, dans le premier état ladite au moins une concavité tend à rapprocher la surface externe de la vitre qui comporte ladite au moins une concavité de l'intérieur de l'aéronef lorsqu'il n'y a pas de différence de pression entre la surface externe et la surface interne de ladite vitre, l'effacement au moins partiel de ladite au moins une concavité de ladite vitre se produisant dans le deuxième état où il existe une différence de pression entre la surface externe et ladite surface interne de ladite vitre.

Tous les avantages exposés ci-dessus concernant la vitre du hublot qui comporte ladite au moins une concavité s'appliquent à la vitre extérieure du hublot lorsque celui-ci comporte une vitre intérieure et une vitre extérieure dotée d'au moins une concavité.

La différence de pression entre la surface externe de la vitre extérieure et la surface interne de la vitre intérieure correspond à la différence de pression entre les surfaces externe et interne de la vitre extérieure en raison de la présence, dans la vitre intérieure, d'orifice(s) égalisateur(s) de pression.

Selon une caractéristique possible, la vitre comportant ladite au moins une concavité est un assemblage de plusieurs plis fixés ensemble par l'intermédiaire d'au moins un film intercalaire disposé entre deux plis consécutifs.

La vitre constitue en quelque sorte une structure sandwich ou feuilletée.

L'ensemble ou l'assemblage des plis structuraux maintenus de façon permanente les uns avec les autres procure plus de rigidité à la vitre ainsi obtenue qu'avec une vitre de l'art antérieur.

On notera que l'épaisseur de l'assemblage feuilleté ou sandwich peut être réduite de façon très significative par rapport à l'épaisseur totale des deux vitres intérieure et extérieure d'un hublot de l'art antérieur.

Cette réduction d'épaisseur se traduit par une diminution très significative de la masse embarquée.

Les plis de l'assemblage feuilleté sont, par exemple, solidarisés ensemble par collage.

Un ou plusieurs films intercalaires sont par exemple disposés entre deux plis consécutifs afin d'assurer le collage des plis l'un avec l'autre, par exemple après chauffage de l'ensemble dans un autoclave.

A titre d'exemple, l'assemblage comprend deux plis et un film intercalaire d'adhésion entre les deux plis superposés.

Selon une autre caractéristique, le système d'étanchéité pour le montage de ladite au moins une vitre dans le cadre de fixation est en mastic polysulfuré.

Ce système d'étanchéité ou système de joint d'étanchéité assure l'étanchéité à la fois au sol (pluie, poussières...) et envol et ce, compte tenu de la pressurisation de l'aéronef en vol.

Le mastic polysulfuré est particulièrement avantageux dans la mesure où il se déforme beaucoup moins en cours d'utilisation (notamment en vol) que les matériaux des joints d'étanchéité de l'art antérieur, tout en assurant l'étanchéité de façon très satisfaisante au sol et en vol.

Selon d'autres caractéristiques possibles prises isolément ou en combinaison, avec l'une ou plusieurs des caractéristiques exposées ci-dessus:
- l'épaisseur de la vitre comportant ladite au moins une concavité est réduite par rapport à l'épaisseur d'une vitré de hublot conventionnelle (état de la technique) ;
- la vitre comportant ladite au moins une concavité est réalisée par moulage d'un matériau transparent et son épaisseur est réduite par rapport à celle d'une vitre de hublot conventionnelle (état de la technique).

Il est par exemple possible d'utiliser comme matériau transparent coulé de l'acrylique ou du polycarbonate. Il serait alternativement possible d'utiliser de l'acrylique étiré en réalisant un pressage ou matriçage à chaud.

L'invention concerne également un aéronef comprenant un fuselage et au moins un hublot tel que brièvement exposé ci-dessus et qui est fixé audit fuselage.

De façon générale, un tel aéronef comprend une pluralité de hublots de ce type qui n'introduisent pas de masse additionnelle par rapport aux hublots de l'état de la technique.

L'invention concerne aussi un procédé de fabrication d'un hublot d'aéronef du genre comportant au moins une vitre qui a une surface interne et une surface externe, le procédé comportant une étape de conformation de la vitre pour conférer à la surface externe de celle-ci au moins une concavité avec une profondeur donnée, ladite au moins une concavité étant prévue pour, être maintenue dans la surface externe avec ladite profondeur en l'absence de différence de pression entre les surfaces interne et externe de la vitre.

Le terme conformation couvre tout principe d'obtention d'une forme complexe concave, qu'on l'obtienne par moulage, étirage, pliage, conformation à chaud, fluage ou tout autre principe de mise en forme.

Un avantage de cet aspect de l'invention est de permettre de déterminer, pour la vitre pourvue de ladite au moins une concavité, une forme aérodynamique optimale en vol (en présence d'un différentiel de pression prédéterminé) en partant d'une forme au sol qui ne présente pas de caractéristique aérodynamique optimale, mais, assure néanmoins une bonne visibilité.

Dans un procédé conforme à l'invention, l'étape de conformation de la vitre est adaptée pour que ladite au moins une concavité conférée à la surface externe de cette vitre s'efface au moins partiellement au fur et à mesure de l'établissement d'une différence de pression entre les surfaces interne et externe de ladite vitre.

Selon une caractéristique possible, la vitre pourvue de ladite au moins une concavité est conçue pour que, lorsqu'une différence de pression prédéterminée s'exerce entre ses surfaces interne et externe, la surface externe adopte une forme aérodynamique optimale pour un aéronef donné.

Selon une caractéristique possible, le hublot comportant au moins deux vitres, à savoir une vitre intérieure et une vitre extérieure, l'étape de conformation s'applique à la vitre extérieure.

Tous les avantages du procédé exposés ci-dessus s'appliquent à l'étape de conformation de la vitre extérieure du hublot lorsque celui-ci comporte une vitre intérieure et une vitre extérieure pourvue d'au moins une concavité.

Selon d'autres caractéristiques possibles prises isolément ou en combinaison avec au moins l'une des caractéristiques sus-visées :
- le procédé comporte une étape préalable d'assemblage de plusieurs plis et d'au moins un film intercalaire disposé entre deux plis consécutifs pour assurer la fixation de l'ensemble des plis ainsi assemblés ;
- l'étape de fixation est une étape de collage, par exemple par chauffage de l'ensemble dans un autoclave ;
- le procédé comporte une étape d'injection d'un matériau constitutif d'un système d'étanchéité autour de ladite au moins une vitre pour son montage dans un cadre de fixation du hublot ;
- le matériau constitutif du système d'étanchéité qui est injecté est un mastic polysulfuré.

D'autres caractéristiques et avantages de la présente invention seront mieux compris à l'aide de la description et des Figures annexées parmi lesquelles :
- la Figure 1 est une vue en coupe d'un hublot de l'état de la technique monté sur une partie de fuselage d'un aéronef lors d'un premier état dans lequel l'aéronef se trouve au sol ;
- la Figure 2 est une vue du hublot lors d'un second état, l'aéronef se trouvant en altitude;
- la Figure 3 représente un hublot de l'état de la technique dans lequel la vitre extérieure a été rompue ;
- la Figure 4 représente une vue en coupe schématique d'un hublot selon un premier mode de réalisation de l'invention et dans un premier état de l'aéronef ;
- la Figure 5 est une vue du hublot de la Figure 4 dans un second état de l'aéronef, lorsqu'il se trouve à haute attitude
- la Figure 6 représente un organigramme d'un procédé de fabrication d'un hublot d'aéronef selon l'invention ;
- la Figure 7 est une vue en coupe schématique d'un hublot selon un deuxième mode de réalisation de l'invention et dans un premier état de l'aéronef ;
- les Figures 8a et 8b sont des vues en coupe schématiques partielles agrandies d'un système d'étanchéité d'un hublot de l'art antérieur respectivement au sol et en vol ;
- les Figures 9a et 9b sont des vues correspondantes à celles des Figures 8a et 8b du système d'étanchéité du hublot de la Figure 7.

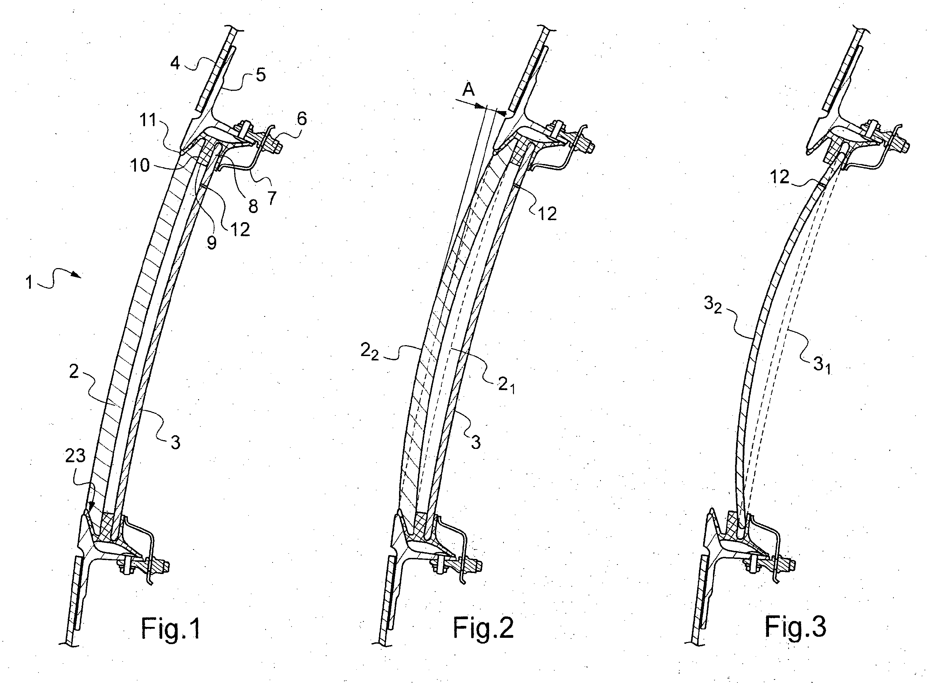

A la Figure 1, on a représenté une vue en coupe schématique d'un hublot d'aéronef de l'état de la technique monté sur un fuselage 4. Le hublot 1 comporte principalement une vitre extérieure 2 et une vitre intérieure 3 qui sont montées sur un cadre métallique 5 dans un système d'étanchéité ou joint d'étanchéité 8-11. Le joint d'étanchéité est disposé sur les pourtours sensiblement parallèles des deux vitres. Le joint d'étanchéité 8-11 est maintenu par un profilé métallique élastique 7, monté sur une articulation 6 qui est solidaire du cadre métallique 5 du hublot.

Le hublot est fabriqué de manière à ce que, à la pression atmosphérique de l'embarquement (premier état), la forme de la vitre 2 extérieure est sensiblement en prolongement de la forme du fuselage. Les vitres intérieure et extérieure ont alors des surfaces sensiblement parallèles, ce qui permet au passager de regarder à travers le hublot le paysage au décollage sans subir une observation déformée.

A la Figure 2, l'aéronef (aéronef de ligne) a atteint sa vitesse de croisière et son altitude de croisière lors d'un second état. La différence de pression entre l'atmosphère extérieure d'une part et l'atmosphère contrôlée à l'intérieur de la cabine d'autre part, produit une déformation de la vitre extérieure qui passe de la position 2₁ (représentée en tirets à la Figure 2 et correspondant à la position de la vitre extérieure à la Figure 1) à une position 2₂ dans laquelle la vitre extérieure fait saillie par rapport au fuselage, vers l'extérieur de celui-ci.

La vitre extérieure 2 est conçue de manière à ce que dans les conditions de vol qui se produisent lors du second état, d'une part la vitre extérieure 2 en position 2₂ dépasse d'une épaisseur A par rapport à la position idéale, à affleurement, 2₁ représentée en tirets et, d'autre part, l'épaisseur A ne dépasse pas une valeur déterminée. On peut ainsi maintenir l'effet de trainée aérodynamique (lors de la phase de croisière de l'aéronef de ligne ainsi équipé) dans des limites considérées comme acceptables dans cet état de la technique.

Pour s'assurer du respect de cette limite A, il est nécessaire de réaliser une vitre extérieure présentant une épaisseur suffisante.

Cette épaisseur doit être supérieure à l'épaisseur de la vitre intérieure qui ne se déforme pas.

En effet, la vitre intérieure 3 n'est pas soumise à la différence de pression grâce à la disposition de trous égalisateurs de pression comme le trou 12 aux Figures 1 à 3.

A la Figure 3, on a représenté la situation lors de la rupture accidentelle en altitude de la vitre extérieure 2.

La vitre intérieure passe alors de la position 3₁ (représentée en tirets et correspondant à la position de la vitre intérieure sur la Figure 2) à une position 3₂ parce que la pression extérieure a chuté avec la perte de la vitre extérieure. Le trou, servant précédemment à équilibrer les pressions, est suffisamment petit pour ne générer qu'une fuite minimale sans préjudice pour le maintien de la pression interne du véhicule. Il est bien entendu que la situation dans laquelle la vitre intérieure 3 devient la seule vitre du hublot est une circonstance accidentelle et fort peu fréquente.

Le véhicule pour lequel l'invention a été conçue est un aéronef, par exemple un avion de ligne. Pour les besoins de l'analyse du problème technique et ainsi qu'il ressort de la présentation de l'état de la technique aux Figures précédentes, deux états de l'aéronef ont été identifiés dans lesquels les hublots présentent des comportements, notamment aérodynamiques, différents, à savoir :
- un état au sol où l'aéronef se trouve à l'arrêt ou à de faibles vitesses et qui définit un premier état (premier état dit de repos) pour lequel il n'existe pas de différence de pression entre l'intérieur et l'extérieur de l'aéronef, et
- un état en vol qui définit un deuxième état de l'aéronef pour lequel une différence de pression est établie entre l'intérieur et l'extérieur de l'aéronef lorsque la pressurisation de la cabine a été activée.

Ce deuxième état peut par exemple être celui pour lequel l'aéronef est à son altitude de croisière.

À la fois pour réduire la masse de la vitré extérieure et pour améliorer l'impact du hublot sur la trainée aérodynamique, le processus de conception du hublot a été inversé. Au lieu de donner au hublot une forme à affleurement dans le premier état au sol, et de chercher à limiter ensuite sa déformation dans le second état en vol comme dans l'état de la technique, l'invention propose, pour une épaisseur minimale de la vitre extérieure, de rechercher une forme de vitre extérieure dans l'état au sol qui produise, dans le second état en vol, une forme optimale du point de vue de l'effet aérodynamique.

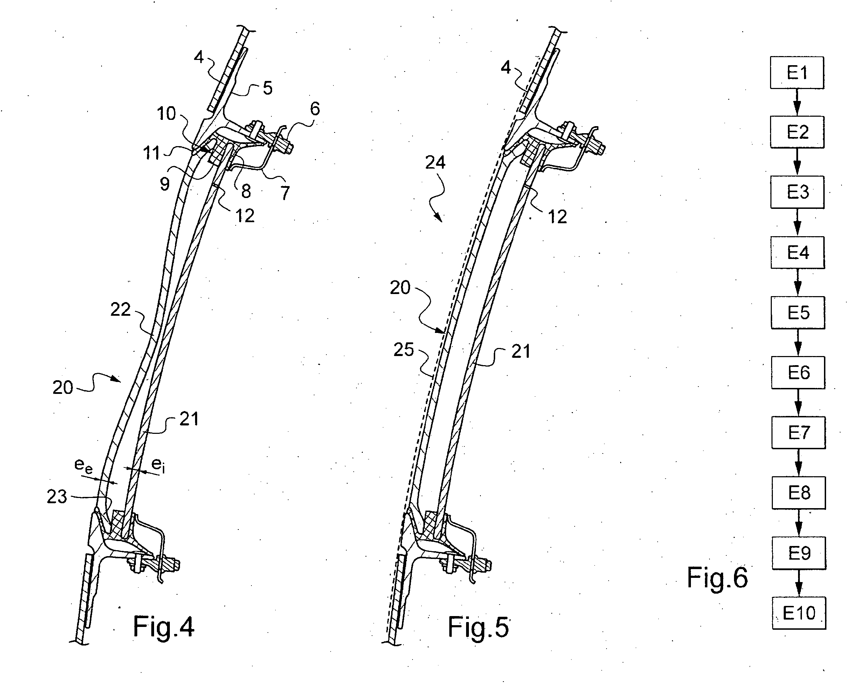

A la Figure 4, on a représenté une vue en coupe schématique d'un hublot selon un premier mode de réalisation de l'invention, monté dans un fuselage 4 d'aéronef. Sur cette Figure, les mêmes éléments que ceux de la Figure 1 portent les mêmes numéros de référence et ne seront pas décrits plus avant. On remarque la disposition d'une vitre extérieure 20 dont l'épaisseur eₑ est sensiblement réduite par rapport à l'épaisseur de la vitre équivalente extérieure 2 de l'état de la technique (Figures 1 et 2).

De plus, la vitre extérieure 20 présente, dans une section transversale du fuselage, une concavité 22 dans sa surface externe qui tend à rapprocher la surface interne de cette vitre de la surface externe de la vitre intérieure 21. Ainsi, l'apex de la surface interne de la vitre extérieure 20 se trouve à proximité ou au contact avec la surface externe de la vitre intérieure 21. L'amplitude ou la profondeur de la concavité s'étend dans la section transversale du fuselage.

On notera que la concavité est formée dans une direction opposée à la concavité du fuselage, le fuselage ayant une forme bombée vers l'extérieur de l'aéronef.

Cette disposition d'une concavité 22 rapprochant la vitre extérieure de la vitre intérieure peut être conférée à la vitre extérieure sans introduire de déformation majeure dans la vision du passager vers l'extérieur, à travers le hublot.

Cette concavité 22 est conçue de manière à se former pleinement à chaque fois que le hublot se trouve dans le premier état précité (aéronef au sol).

Cette concavité est également conçue pour disparaître lorsque l'aéronef est dans un deuxième état prédéterminé (en vol). Cet état peut correspondre par exemple à l'altitude de croisière de l'aéronef pour laquelle il est préférable d'avoir les meilleures performances aérodynamiques possibles. La concavité se forme ainsi progressivement lorsque l'aéronef quitte l'altitude de croisière pour descendre. Inversement, la concavité qui est présente dans le premier état s'efface progressivement lorsque l'aéronef quitte cet état pour entrer dans un deuxième état où une différence de pression s'établit entre l'intérieur et l'extérieur de l'aéronef et donc entre les surfaces interne et externe de la vitre extérieure. La surface interne de la vitre extérieure s'écarte progressivement de la surface externe de la vitre intérieure jusqu'à adopter la position où la concavité est totalement effacée à l'altitude de croisière de l'aéronef (deuxième état prédéterminé).

A la Figure 5, on a représenté le hublot du mode de réalisation de la Figure 4 dans le deuxième état prédéterminé de l'aéronef (vol à l'altitude de croisière).

Dans cet état prédéterminé, la forme de la vitre extérieure 20 a été conçue pour que la surface externe de cette vitre épouse le profil aérodynamique optimal 25 représenté en tirets et qui est situé dans le prolongement du profil incurvé du fuselage. Dans cet état, le hublot n'introduit aucun effet pénalisant en terme de trainée, ce qui constitue une amélioration par rapport à l'état de la technique (voir Figure 2) dans lequel la vitre extérieure forme une saillie A qui génère une trainée aérodynamique.

Lorsque l'aéronef redescend au sol, la concavité se réforme progressivement et le hublot reprend les conditions du premier état dans lequel la concavité 22 de la Figure 4 réapparaît complètement en l'absence de différentiel de pression interne-externe à l'aéronef.

Dans d'autres modes de réalisation, plusieurs concavités peuvent être formées sur une même vitre extérieure dans le premier état. Ces concavités configurées avec la même orientation sur la surface externe de la vitre s'effacent progressivement lorsque l'aéronef quitte le premier état.

On notera que dans le cas d'une rupture en vol de la vitre extérieure 20 de la Figure 5, la vitre intérieure 21 peut adopter exactement la forme ou la position de la vitre 3₂ représentée pour le hublot de l'état de la technique à la Figure 3. En effet, la vitre intérieure du hublot selon l'invention est identique à celle du hublot de l'état de la technique.

L'invention permet ainsi :
- de réduire la quantité de matière utilisée pour réaliser le hublot et donc la masse embarquée à bord de l'aéronef ; en effet l'épaisseur de la vitre extérieure 20 est réduite à une valeur eₑ qui peut être à nouveau voisine de, voire identique à l'épaisseur eu de la vitre intérieure 21 (une réduction de 30% de l'épaisseur de la vitre extérieure est par exemple envisageable avec un matériau transparent coulé tel que l'acrylique coulé) ;
- de conférer à la vitre extérieure et donc au hublot une forme aérodynamique optimale lors d'un vol de l'aéronef à haute altitude ; et
- de conserver une bonne visibilité à travers le hublot au sol (premier état), en raison de la réduction d'épaisseur de la vitre extérieure et par une disposition appropriée de la concavité imposée à la vitre extérieure (concavité centrée par rapport à la vitre).

A la Figure 6, on a représenté l'organigramme d'un procédé de fabrication d'un hublot selon l'invention.

On note que les premières étapes E1 et E2 du procédé décrit sont suffisantes pour fabriquer le hublot de l'invention et que les étapes ultérieures peuvent être exécutées optionnellement.

Le procédé de fabrication d'un hublot d'aéronef à déformation programmée selon l'invention comporte une première étape E1 de détermination d'un matériau adapté pour former la vitre extérieure du hublot. Dans un mode particulier de réalisation, on choisit par exemple un matériau transparent tel que l'acrylique coulé ou le polycarbonate.

Dans une seconde étape E2, le procédé de fabrication consiste à calculer une première forme caractéristique de la vitre extérieure dans le premier état précité (état au sol de l'aéronef).

Cette première forme de la vitre caractéristique du premier état est telle que, lorsqu'on lui applique les conditions physiques du second état prédéterminé (par exemple différence de pression) prédéterminée entre l'intérieur et l'extérieur de l'aéronef, par exemple lorsque l'aéronef se trouve à une altitude de croisière par exemple de 37000 pieds, elle se transforme en une seconde forme. Cette seconde forme de la vitre extérieure est déterminée par la forme optimale dictée par les considérations aérodynamiques du vol à l'altitude de croisière.

Pour parvenir à un calcul d'une forme caractéristique du premier état, il faut donc inverser la forme caractéristique du second état prédéterminé sur la base des contraintes résultant des conditions physiques liées au premier état (notamment absence de différence de pression entre l'intérieur et l'extérieur de l'aéronef).

Parmi les conditions physiques liées aux premier et second états précités se trouvent principalement la pression différentielle appliquée aux surfaces interne et externe de la vitre extérieure et, le cas échéant, la température.

Sur la base des deux premières étapes, il est alors possible de déterminer la quantité de matière et l'épaisseur de la vitre extérieure, ainsi que sa forme.

La première forme conférée à la vitre extérieure pour le premier état permet ainsi de diminuer l'épaisseur de cette vitre par rapport à l'état de la technique. En effet, dans l'état de la technique l'épaisseur de la vitre extérieure était nécessairement plus grande afin de résister au différentiel de pression s'établissant lors du vol de l'aéronef, notamment à l'altitude de croisière.

Afin d'optimiser l'étape de calcul de la forme de la vitre caractéristique du premier état, il est possible de compléter le calcul par la mise en oeuvre d'une étape E3 au cours de laquelle on réalise une maquette numérique du hublot ou d'au moins la vitre extérieure du hublot. On évite ainsi d'avoir recours à des essais sur des maquettes physiques.

On exécute une modélisation par éléments finis d'une forme caractéristique initiale pour la vitre extérieure. On génère un modèle des contraintes physiques liées aux premier et second états et qui sont appliquées au hublot dans ces états (étape E4). Puis, on détermine (étape E5) la forme de la vitre extérieure dans le premier état de manière à ce que la forme de cette vitre dans le second état prédéterminé respecte les conditions aérodynamiques optimales de l'aéronef sur lequel est monté le hublot.

Une fois que la forme caractéristique de la vitre extérieure dans le premier état a été conçue (par calcul notamment), lors des étapes E1 et E2 et éventuellement E3 à E5, le procédé peut comporter en outre, une étape E6 de programmation de machines de production de vitres extérieures. Cette étape est effectuée sur la base de la détermination de la forme caractéristique de la vitre extérieure dans le premier état.

Cette programmation permet de former et d'usiner la vitre extérieure dans un matériau déterminé.

Dans un mode particulier de réalisation, la production d'une vitre extérieure comporte une étape E7 d'obtention de la vitre extérieure par moulage et/ou par pressage d'un matériau, par exemple une plaque d'acrylique.

Il est ainsi possible de réaliser des formes complexes avec une ou plusieurs concavités.

Pour réaliser le moulage, on utilise des formes ou moules programmés lors de l'étape de programmation précédente.

Chaque forme ou moule subit une étape E8 de polissage pour conférer une caractéristique optique déterminée à la vitre extérieure ainsi formée afin de garantir une bonne visibilité à travers la vitre.

Enfin, le procédé de fabrication de vitre extérieure pour hublot à déformation programmée selon l'invention peut également comporter une étape de découpe et/ou d'usinage E10 de la vitre extérieure notamment pour l'adapter aux cadres de fixation conventionnels existant sur les aéronefs.

Cette découpe et/ou usinage permet d'adapter la vitre extérieure au hublot et permet aussi d'obtenir une orientation déterminée des bords de la feuille servant de vitre extérieure au hublot par rapport au cadre de hublot.

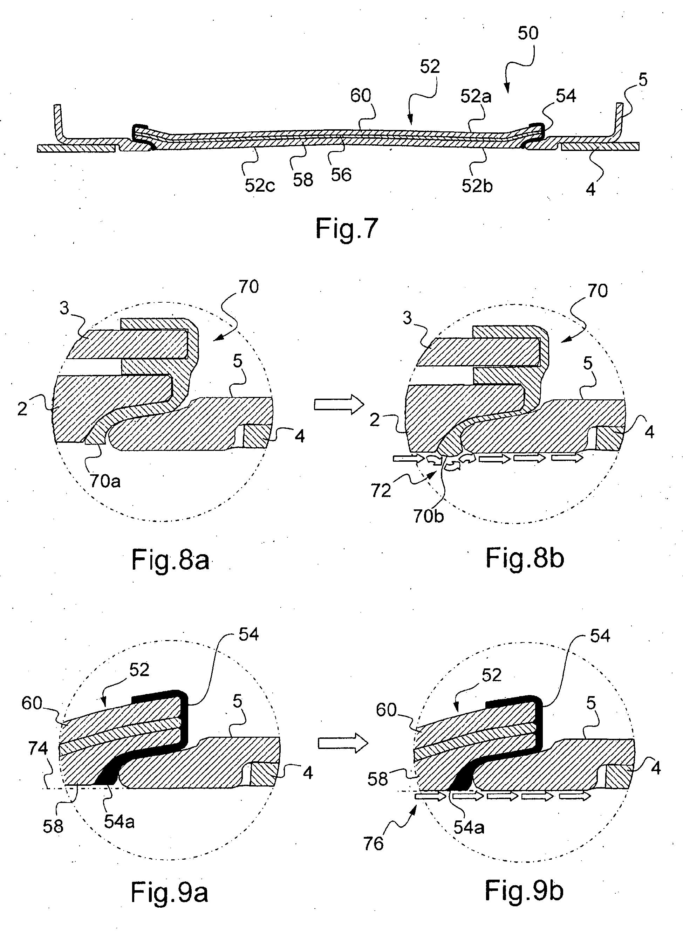

Comme représenté à la Figure 7, un hublot 50 d'aéronef comprend une vitre 52 montée dans le cadre de fixation 5 par l'intermédiaire d'un système d'étanchéité 54.

Le cadre 5 qui est identique à celui illustré sur les Figures 4 et 5 est utilisé pour la fixation du hublot au fuselage 4 de l'aéronef.

Les autres éléments nécessaires au montage de la vitre 52 sur le cadre n'ont pas été représentés ici par souci de clarté et dans la mesure où ils sont bien connus de l'homme du métier.

La vitre 52 est illustrée dans un premier état de l'aéronef (état de repos).

La vitre 52 une surface interne 52a et une surface externe 52b dans laquelle est aménagée une concavité 52c orientée vers l'extérieur de l'aéronef.

Cette concavité est moins marquée que sur la Figure 4 mais est néanmoins présente.

Tout ce qui a été écrit en relation avec les Figures 4 et 5 à propos de la concavité et de son effacement progressif au fur et à mesure de l'établissement d'une différence de pression entre l'intérieur et l'extérieur du fuselage de l'aéronef s'applique également dans le présent mode de réalisation et ne sera donc pas répété.

Contrairement au mode de réalisation des Figures 4 et 5, celui de la Figuré 7 ne comporte qu'une seule vitre qui est un assemblage de plusieurs plis liés ensemble par une couche ou un film d'adhésif intercalaire 56.

Comme représenté sur la Figure 7, l'assemblage feuilleté 52 comprend deux plis 58 (pli extérieur) et 60 (pli intérieur) prenant en sandwich le film intercalaire adhésif 56.

Par exemple, le chauffage de l'assemblage ainsi constitué dans un autoclave permet de coller ensemble les deux plis 58 et 60.

Dans l'exemple de réalisation décrit en référence à la Figure 7, les deux plis sont tous deux réalisés dans l'un des matériaux transparents mentionnés ci-dessus.

Le film intercalaire 56 est par exemple réalisé en PVB (Polyvinyle de Butyral) ou en PU (Polyuréthane).

Dans un hublot de l'art antérieur comportant une vitre extérieure et une vitre intérieure, un exemple d'épaisseur totale du hublot est de 16,25 mm (11 mm pour la vitre extérieure et 5,25 mm pour la vitre intérieure).

L'assemblage feuilleté de la vitre 52 permet de réduire l'épaisseur totale du hublot à 11 mm (5 mm pour le pli extérieur, 4 mm pour le pli intérieur et 2 mm pour le film intercalaire).

Une telle diminution d'épaisseur permet de réduire le poids d'un hublot et donc le poids total embarqué pour l'ensemble des hublots d'un aéronef.

Le système d'étanchéité ou joint d'étanchéité 54 utilisé pour le montage de la vitre 52 sur le cadre 5 est par exemple réalisé en mastic polysulfuré.

Ce matériau d'étanchéité présente l'avantage de très peu se déformer lorsqu'il est soumis à des sollicitations comme par exemple une différence de pression entre la surface interne et la surface externe de la vitre du hublot.

Des avantages liés à l'utilisation de ce matériau seront décrits en référence aux Figures 8a, 8b, 9a et 9b.

La fabrication de l'assemblage feuilleté ou sandwich 52 est particulièrement simple puisqu'elle peut être réalisée en une seule opération de moulage, en disposant préalablement à l'intérieur d'un moule de forme adaptée à la forme souhaitée pour la vitre l'assemblage des deux plis séparés par le film d'adhésion.

Le mastic polysulfuré est ensuite injecté dans le moule à la périphérie de l'assemblage pour que l'ensemble constitué de la vitre 52 et du système d'étanchéité 54 soit obtenu après ouverture du moule.

La Figure 8a illustre de façon schématique une vue partielle agrandie d'un hublot de l'art antérieur comportant les deux vitres 2 et 3 du hublot de la Figure 1 et un système d'étanchéité 70 positionné à la périphérie des deux vitres pour leur montage dans le cadre de fixation 5.

La Figure 8a illustre la position du système d'étanchéité ou joint d'étanchéité 70 lorsque l'aéronef est au sol.

Ainsi que représenté de manière schématique, la surface extérieure du joint 70a est sensiblement plate.

Lorsque l'aéronef est en vol et qu'une différence de pression s'établit entre l'intérieur et l'extérieur de l'aéronef, le joint 70 se déforme comme illustré sur la Figure 8b et la surface extérieure 70a se déforme en se bombant vers l'extérieur et prend l'allure de la protubérance 70b de la Figure 8b.

Cette déformation a par exemple lieu sous l'établissement d'une pression dans la cabine de l'aéronef.

On constate que la partie du joint disposée entre le pourtour de la vitre extérieure 2 et la périphérie interne du cadré 5 est pincée entre ces derniers sous l'effet de la différence de pression.

Il résulte de l'apparition de la forme bombée 70b que la surface extérieure du joint n'est plus affleurante par rapport à la surface externe de la vitre extérieure 2 et à la surface externe du cadre de fixation 5.

Ainsi, ce désaffleurement entraine un décollement du flux d'air 72 longeant la surface externe de l'aéronef au niveau de la protubérance 70b, créant ainsi un phénomène de trainée parasite.

Les Figures 9a et 9b illustrent respectivement le comportement du système d'étanchéité 54 de la Figure 7 lorsque l'aéronef est au sol et en vol (soumis à une même différence de pression que celle établie à la Figure 8b).

Comme représenté sur la Figure 9a, la surface externe 54a du système ou joint d'étanchéité 54 est plane au sol et reste également sensiblement plane en vol, même lorsque la partie du système d'étanchéité disposée entre le pourtour du pli externe 58 et la périphérie interne du cadre 5 est pincée entre ces derniers sous l'effet de la différence de pression.

Sous l'effet de la différence de pression, la concavité de la vitre 52 s'effacé progressivement et l'ensemble de la vitre 52 et du système d'étanchéité 54 se déplace vers l'extérieur de l'aéronéf, de façon à rejoindre la ligne virtuelle 74 représentant le prolongement de la surface externe du cadre 5 et du fuselage 4 au droit de la vitré.

Ainsi, sous l'effet d'une différence de pression, l'assemblage feuilleté 52 est conçu pour que sa surface externe ainsi que celle 54a du système d'étanchéité soit disposée de manière affleurante par rapport à la surface externe du cadre et du fuselage.

Le flux d'air 76 longeant la surface externe de l'aéronef n'est donc pas perturbé à son passage au droit du joint d'étanchéité, évitant ainsi la création d'un phénomène de trainée parasite.

Le fait d'éviter ce phénomène peut être comparé à une réduction de la masse embarquée à bord de l'aéronef en terme d'économie de carburant.

## Revendications

1. Hublot d'aéronef, du genre comportant un cadre de fixation (5) pour la fixation du hublot au fuselage (4) d'un aéronef et au moins une vitre qui est montée dans le cadre de fixation par l'intermédiaire d'un système d'étanchéité (7-11), ladite au moins une vitre (20) ayant une surface interne et une surface externe,
- la vitre (20) comporte, dans un premier état dit de repos, au moins une concavité dans sa surface externe lorsqu'il n'y a pas de différence de pression entre la surface externe et la surface interne de la vitre,
**caractérisé en ce que** :
- ladite au moins une concavité de la vitre s'efface au moins partiellement dans un deuxième état où il existe une différence de pression entre la surface externe et la surface interne de la vitre.

2. Hublot d'aéronef selon la revendication 1, caractérisé en ce quel lorsque la différence de pression entre la surface externe et la surface interne de la vitre atteint une valeur prédéterminée ladite au moins une concavité s'efface complètement.

3. Hublot d'aéronef selon l'une des revendications 1 ou 2, **caractérisé en ce que** en vol la surface externe de la vitre comportant ladite au moins une concavité présente une forme aérodynamique optimale établie pour un aéronef donné.

4. Hublot d'aéronef selon l'une des revendications 1 à 3, **caractérisé en ce que** ladite au moins une concavité est opposée à la concavité du fuselage de l'aéronef.

5. Hublot d'aéronef selon l'une des revendications 1 à 4, **caractérisé en ce que** ladite au moins une concavité est définie dans une section transversale du fuselage.

6. Hublot d'aéronef selon l'une des revendications 1 à 5, **caractérisé en ce que** la vitre comportant ladite au moins une concavité comporte au moins un bord qui présente une forme lui permettant d'insérer ladite vitre dans un cadre de fixation conventionnel.

7. Hublot selon l'une des revendications 1 à 6, **caractérisé en ce qu'**il comporte au moins deux vitres, à savoir une vitre intérieure (21) et une vitre extérieure (20) qui comporte ladite au moins une concavité, chaque vitre ayant une surface interne et une surface externe, la surface interne de la vitre extérieure étant en vis-à-vis de la surface externe de la vitre intérieure.

8. Hublot selon l'une des revendications 1 à 7, **caractérisé en ce que** dans le premier état ladite au moins une concavité tend à rapprocher la surface externe de la vitre qui comporte ladite au moins une concavité de l'intérieur de l'aéronef, lorsqu'il n'y a pas de différence de pression entre la surface externe et la surface interne de ladite vitre, l'effacement au moins partiel de ladite au moins une concavité de ladite vitre se produisant dans le deuxième état où il existe une différence de pression entre la surface externe et la surface interne de ladite vitre.

9. Hublot selon l'une des revendications 1 à 8, **caractérisé en ce que** la vitre comportant ladite au moins une concavité est un assemblage de plusieurs plis fixés ensemble par l'intermédiaire d'au moins un film intercalaire disposé entre deux plis consécutifs.

10. Hublot selon la revendication 9, **caractérisé en ce que** l'assemblage comprend deux plis et un film intercalaire entre les deux plis superposés.

11. Hublot selon l'une des revendications 1 à 10, **caractérisé en ce que** le système d'étanchéité pour le montage de ladite au moins une vitre dans le cadre de fixation est en mastic polysulfuré.

12. Aéronef **caractérisé en ce qu'**il comprend un fuselage et au moins un hublot d'aéronef selon l'une des revendications 1 à 11, le hublot étant fixé au fuselage.

13. Procédé de fabrication d'un hublot d'aéronef du genre comportant au moins une vitre (20) qui a une surface interne et une surface externe, le procédé comportant une étape de conformation de la vitre (20) pour conférer à la surface externe de celle-ci au moins une concavité avec une profondeur donnée, ladite au moins une concavité étant prévue pour être maintenue dans la surface externe avec ladite profondeur en l'absence de différence de pression entre les surfaces interne et externe de la vitre,**caractérisé en ce que** l'étape de conformation de la vitre est adaptée pour que ladite au moins une concavité conférée à la surface externe de cette vitre s'efface au moins partiellement au fur et à mesure de l'établissement d'une différence de pression entre les surfaces interne et externe de ladite vitre.

14. Procédé selon la revendication 13, **caractérisé en ce que** la vitre comportant ladite au moins une concavité est conçue pour que, lorsqu'une différence de pression prédéterminée s'exerce entre ses surfaces interne et externe, la surface externe adopte une forme aérodynamique optimale pour un aéronef donné.

15. Procédé selon la revendication 13 ou la revendication 14, **caractérisé en ce que** le hublot comportant au moins deux vitres, à savoir une vitre intérieure (21) et une vitre extérieure (20), l'étape de conformation s'applique à la vitre extérieure (20).

16. Procédé selon l'une des revendications 13 à 15, **caractérisé en ce qu'**il comporte une étape préalable d'assemblage de plusieurs plis et d'au moins un film intercalaire disposé entre deux plis consécutifs pour assurer la fixation de l'ensemble des plis ainsi assemblés.

17. Procédé selon l'une des revendications 13 à 16, **caractérisé en ce qu'**il comporte une étape d'injection d'un matériau constitutif d'un système d'étanchéité autour de ladite au moins une vitre pour son montage dans un cadre de fixation du hublot.

18. Procédé selon la revendication 17, **caractérisé en ce que** le matériau constitutif du système d'étanchéité qui est injecté est un mastic polysulfuré.

## Patentansprüche

1. Flugzeugfenster, umfassend einen Befestigungsrahmen (5) zur Befestigung des Fensters am Rumpf (4) eines Flugzeugs und mindestens eine Scheibe, die in dem Befestigungsrahmen mit Hilfe eines Abdichtungssystems (7-11) montiert ist, wobei die mindestens eine Scheibe (20) eine Innenfläche und eine Außenfläche aufweist,
- wobei die Scheibe (20) in einem ersten so genannten Ruhezustand mindestens eine Konkavität auf ihrer Außenfläche umfasst, wenn kein Druckunterschied zwischen der Außenfläche und der Innenfläche der Scheibe vorhanden ist,
**dadurch gekennzeichnet, dass**
- die mindestens eine Konkavität der Scheibe zumindest teilweise in einem zweiten Zustand verschwindet, in dem ein Druckunterschied zwischen der Außenfläche und der Innenfläche der Scheibe vorhanden ist.

2. Flugzeugfenster nach Anspruch 1, **dadurch gekennzeichnet, dass**, wenn der Druckunterschied zwischen der Außenfläche und der Innenfläche der Scheibe einen vorbestimmten Wert erreicht, die mindestens eine Konkavität vollkommen verschwindet.

3. Flugzeugfenster nach einem der Ansprüche 1 oder 2, **dadurch gekennzeichnet, dass** während des Flugs die Außenfläche der Scheibe, die die mindestens eine Konkavität umfasst, eine optimale aerodynamische Form aufweist, die für ein gegebenes Flugzeug erstellt wurde.

4. Flugzeugfenster nach einem der Ansprüche 1 bis 3, **dadurch gekennzeichnet, dass** die mindestens eine Konkavität zu der Konkavität des Rumpfes des Flugzeugs entgegengesetzt ist.

5. Flugzeugfenster nach einem der Ansprüche 1 bis 4, **dadurch gekennzeichnet, dass** die mindestens eine Konkavität in einem Querschnitt des Rumpfes definiert ist.

6. Flugzeugfenster nach einem der Ansprüche 1 bis 5, **dadurch gekennzeichnet, dass** die Scheibe, die die mindestens eine Konkavität umfasst, mindestens einen Rand aufweist, der eine Form hat, die es ihm ermöglicht, die Scheibe in einen herkömmlichen Befestigungsrahmen einzusetzen.

7. Fenster nach einem der Ansprüche 1 bis 6, **dadurch gekennzeichnet, dass** es mindestens zwei Scheiben umfasst, nämlich eine innere Scheibe (21) und eine äußere Scheibe (20), die die mindestens eine Konkavität umfasst, wobei jede Scheibe eine Innenfläche und eine Außenfläche aufweist, wobei die Innenfläche der äußeren Scheibe der Außenfläche der inneren Scheibe gegenüberliegt.

8. Fenster nach einem der Ansprüche 1 bis 7, **dadurch gekennzeichnet, dass** im ersten Zustand die mindestens eine Konkavität dazu neigt, die Außenfläche der Scheibe, die die mindestens eine Konkavität des Innenraums des Flugzeugs umfasst, anzunähern, wenn kein Druckunterschied zwischen der Außenfläche und der Innenfläche der Scheibe vorhanden ist, wobei das zumindest teilweise Verschwinden der mindestens einen Konkavität der Scheibe im zweiten Zustand erfolgt, in dem ein Druckunterschied zwischen der Außenfläche und der Innenfläche der Scheibe vorhanden ist.

9. Fenster nach einem der Ansprüche 1 bis 8, **dadurch gekennzeichnet, dass** die Scheibe, die die mindestens eine Konkavität umfasst, ein Zusammenbau von mehreren Falzen ist, die mit Hilfe mindestens einer Zwischenfolie, die zwischen zwei aufeinanderfolgenden Falzen angeordnet ist, aneinander befestigt sind.

10. Fenster nach Anspruch 9, **dadurch gekennzeichnet, dass** der Zusammenbau zwei Falze und eine Zwischenfolie zwischen den beiden übereinander liegenden Falzen umfasst.

11. Fenster nach einem der Ansprüche 1 bis 10, **dadurch gekennzeichnet, dass** das Abdichtungssystem für die Montage der mindestens einen Scheibe in dem Befestigungsrahmen aus Polysulfidkitt ist.

12. Flugzeug, **dadurch gekennzeichnet, dass** es einen Rumpf und mindestens ein Flugzeugfenster nach einem der Ansprüche 1 bis 11 umfasst, wobei das Fenster am Rumpf befestigt ist.

13. Verfahren zur Herstellung eines Flugzeugfensters, umfassend mindestens eine Scheibe (20), die eine Innenfläche und eine Außenfläche aufweist, wobei das Verfahren einen Schritt der Formung der Scheibe (20) umfasst, um der Außenfläche derselben mindestens eine Konkavität mit einer gegebenen Tiefe zu verleihen, wobei die mindestens eine Konkavität dazu vorgesehen ist, in der Außenfläche mit der Tiefe bei Nichtvorhandensein eines Druckunterschieds zwischen den Innen- und Außenflächen der Scheibe aufrechterhalten zu werden, **dadurch gekennzeichnet, dass** der Schritt der Formung der Scheibe dazu vorgesehen ist, dass die mindestens eine Konkavität, die der Außenfläche dieser Scheibe verliehen wird, zumindest teilweise im Zug der Herstellung eines Druckunterschieds zwischen den Innen- und Außenflächen der Scheibe verschwindet.

14. Verfahren nach Anspruch 13, **dadurch gekennzeichnet, dass** die Scheibe, die die mindestens eine Konkavität umfasst, derart ausgeführt ist, dass, wenn ein vorbestimmter Druckunterschied zwischen ihren Innen- und Außenflächen ausgeübt wird, die Außenfläche eine optimale aerodynamische Form für ein gegebenes Flugzeug annimmt.

15. Verfahren nach Anspruch 13 oder 14, **dadurch gekennzeichnet, dass**, wenn das Fenster mindestens zwei Scheiben umfasst, nämlich eine innere Scheibe (21) und eine äußere Scheibe (20), sich der Formungsschritt auf die äußere Scheibe (20) bezieht.

16. Verfahren nach einem der Ansprüche 13 bis 15, **dadurch gekennzeichnet, dass** es einen vorherigen Schritt des Zusammenbaus mehrerer Falze und mindestens einer Zwischenfolie, die zwischen zwei aufeinanderfolgenden Falzen angeordnet ist, um die Befestigung der so zusammengebauten Gesamtheit von Falzen zu gewährleisten, umfasst.

17. Verfahren nach einem der Ansprüche 13 bis 16, **dadurch gekennzeichnet, dass** es einen Schritt des Einspritzens eines ein Abdichtungssystem bildenden Materials um die mindestens eine Scheibe für ihre Montage in einem Befestigungsrahmen des Fensters umfasst.

18. Verfahren nach Anspruch 17, **dadurch gekennzeichnet, dass** das das Abdichtungssystem bildende Material, das eingespritzt wird, ein Polysulfidkitt ist.

## Claims

1. Aircraft window, of the type comprising a holding frame (5) for securing the window to the fuselage (4) of an aircraft and at least one pane mounted in the holding frame by means of a sealing system (7-11), said at least one pane (20) having an inner surface and an outer surface,
- the pane (20) comprising, in a first state called the rest state, at least one concavity in its outer surface when there is no pressure difference between the outer surface and the inner surface of the pane,
**characterized in that**:
- said at least one concavity of the pane is at least partially eradicated in a second state in which there is a pressure difference between the outer surface and the inner surface of the pane.

2. Aircraft window according to claim 1, **characterized in that** when the pressure difference between the outer surface and the inner surface of the pane reaches a predetermined value, said at least one concavity is completely eradicated.

3. Aircraft window according to one of claims 1 or 2, **characterized in that** in flight the outer surface of the pane comprising said at least one concavity has an optimum aerodynamic shape established for a given aircraft.

4. Aircraft window according to one of claims 1 to 3, **characterized in that** said at least one concavity is opposite to the concavity of the fuselage of the aircraft.

5. Aircraft window according to one of claims 1 to 4, **characterized in that** said at least one concavity is defined in a transverse cross-section of the fuselage.

6. Aircraft window according to one of claims 1 to 5, **characterized in that** the pane comprising said at least one concavity comprises at least one edge having a shape that makes it possible to insert said pane into a standard holding frame.

7. Window according to one of claims 1 to 6, **characterized in that** it comprises at least two panes, namely an inner pane (21) and an outer pane (20) comprising said at least one concavity, each pane having an inner surface and an outer surface, the inner surface of the outer pane facing the outer surface of the inner pane.

8. Window according to one of claims 1 to 7, **characterized in that** in the first state said at least one concavity tends to move the outer surface of the pane comprising said at least one concavity closer to the inside of the aircraft when there is no pressure difference between the outer surface and the inner surface of said pane, the at least partial eradication of said at least one concavity of said pane taking place in the second state, in which there is a pressure difference between the outer surface and the inner surface of said pane.

9. Window according to one of claims 1 to 8, **characterized in that** the pane comprising said at least one concavity is an assembly of several plies secured together by means of at least one intermediate film arranged between two consecutive plies.

10. Window according to claim 9, **characterized in that** the assembly comprises two plies and an intermediate film between the two superimposed plies.

11. Window according to one of claims 1 to 10, **characterized in that** the sealing system for mounting said at least one pane in the holding frame is made of polysulphide mastic.

12. Aircraft **characterized in that** it comprises a fuselage and at least one aircraft window according to one of claims 1 to 11, the window being secured to the fuselage.

13. Method for the manufacture of an aircraft window of this type comprising at least one pane (20) having an inner surface and an outer surface, the method comprising a step of forming the pane (20) in order to give the outer surface thereof at least one concavity having a given depth, said at least one concavity being intended to be maintained in the outer surface at said depth in the absence of a pressure difference between the inner and outer surfaces of the pane, **characterized in that** the step of forming the pane is adapted so that said at least one concavity given to the outer surface of the pane is at least partially eradicated as and when a pressure difference is established between the inner and outer surfaces of said pane.

14. Method according to claim 13, **characterized in that** the pane comprising said at least one concavity is designed so that, when a predetermined pressure difference operates between its inner and outer surfaces, the outer surface adopts an optimum aerodynamic shape for a given aircraft.

15. Method according to claim 13 or claim 14, **characterized in that**, the window comprising at least two panes, namely an inner pane (21) and an outer pane (20), the forming step is applied to the outer pane (20).

16. Method according to one of claims 13 to 15, **characterized in that** it comprises a prior step of assembling several plies and at least one intermediate film arranged between two consecutive plies for securing the set of plies assembled in this way.

17. Method according to one of claims 13 to 16, **characterized in that** it comprises a step of injecting a material constituting a sealing system around said at least one pane for mounting the pane in a holding frame of the window.

18. Method according to claim 17, **characterized in that** the injected material constituting the sealing system is a polysulphide mastic.
